# EUROPEAN PATENT SPECIFICATION

(11) **EP 3 465 853 B1**
(45) Date of publication and mention of the grant of the patent: **09.12.2020**
(21) Application number: 17757579.2
(22) Date of filing: 30.05.2017
(51) Int. Cl.: H02G 3/04

(54) **CONNECTION ELEMENT AND CABLE ARRANGEMENT**
VERBINDUNGSELEMENT UND KABELANORDNUNG
ÉLÉMENT DE CONNEXION ET AGENCEMENT DE CÂBLES

(30) Priority: 30.05.2016 NO 20160920
(43) Date of publication of application: 10.04.2019
(73) Proprietor: Los Elektro AS, 5430 Bremnes (NO)
(72) Inventor: HÅVIK, Øystein, 5427 Urangsvåg (NO); SÆRSTEN, Per, Oddmund, 5360 Koltveit (NO)
(74) Representative: Acapo AS
(86) International application number: PCT/NO2017/000016
(87) International publication number: WO 2017/209618

(56) References cited:
- EP-A1- 1 113 552
- EP-A1- 2 571 124
- WO-A1-97/12116
- CA-A1- 2 940 877
- FR-A- 1 587 706
- FR-A1- 2 613 550
- FR-A1- 2 888 056
- US-A- 286 943
- US-A- 3 551 983

## Description

### Field of the invention

The invention relates to a cable arrangement for pulling a cable through a borehole as indicated in the preamble of claim 1. The invention also relates to a method for pulling a cable arrangement through a borehole.

### Background of the invention.

High voltage cables are normally held in stretches in the air over a land formation or in ditches in the ground. However, there has been a growing need to lay such cables in boreholes in rock formations or in the ground and soil. How to drill holes for laying cables is known, but the equipment presently available does not allow for pulling cables through long boreholes. For example, it is desirable to be able to pull such cables through boreholes which are several hundred metres long and also several kilometres long.

In order to pull such cables through long boreholes, it is important that the friction between the cable bundle and the interior of the borehole is low. Furthermore, in many cases it will also be important that the cables are in an ordered cable bundle.

WO97/12116 describes coiled tubing friction reducers, and more particularly to a type of coiled tubing friction reducer (CTFR) that works to decrease the friction normally experienced by the coiled tubing when same tubing is run in a bore hole.

EP2571124 describes a cable retaining apparatus for holding high voltage cables. CA2940877A1 relates to a cable and a method to laying said cable. It discloses a plurality of cables that can form a bundle and a clamping element in order to fix the bundle.

### Purpose of the present invention.

It is an aim of the present invention to develop a solution that ensures that one can pull long cables through boreholes. The cables are bundled together with clamps, and it is an aim to be able to couple together the various clamps to achieve a uniform distribution of pulling forces applied to the cables when pulling through a borehole.

It is a further aim to reduce friction between the cable bundle and the borehole, and coupling elements or clamps, or both parts, are therefore equipped with friction reducing means.

When pulling cables through long boreholes, such as horizontal, inclined, arched or vertical boreholes, friction forces between the cable bundle and the inside surface of the borehole arise. These frictional forces have until now not allowed for the pulling of cables through long boreholes without causing damage to the cables. Furthermore, it may also be necessary to lay the cables in ordered bundles such as when one-wire high voltage cables are laid in a three-foil arrangement. It is therefore an aim of the invention to provide coupling elements which connect clamps that bundle together a number of cables. It is a further aim of the invention that the coupling elements are either directly or indirectly equipped with friction reducing means.

When pulling cables through long boreholes or through boreholes with a steep incline, forces can be so great in the cables that they can be overloaded if the pull is directly on the cable. Therefore clamps are described which can directly or indirectly be attached to the cable so that parts of the pulling forces will go through the clamps, i.e. so that in practice one exerts forces at several points along the elongated length of the cable. Preferably, the clamps are evenly distributed along the longitudinal direction of the cable bundle, and connected together by a number of coupling elements.

It is an aim of the invention to provide a pulling arrangement which enables pulling cables through long boreholes. The system must therefore;
1. Include friction reducing means (such as wheels) between clamps and/or coupling elements and the inner surface of the borehole, for transferring the cables into (and out of) the borehole
2. Avoid damage to the outer sheath of the cable when pulling.
3. Bundling of cable, such as for example in a three-foil arrangement. For example, for a single-wire high voltage cables it is important that they lie in a three-foil arrangement to reduce power loss.
4. Securing the cable set in case of short circuiting. That the system keeps the cables in position when a short circuit occurs in the cable set.
5. To be able to withdraw the cable set when a faulty system occurs or during renewal/upgrades on the installation.
6. A coupling element, in the form of rails (mechanical reinforcement) which is used when the forces during pulling or during the operational phase become too large for the cables to be exclusively present in the clamps. Wheels can then be mounted on the rails to reduce friction during pulling. With the use of rails (coupling elements) the clamps will then be anchored to the rail.

### Summary of the Invention

The present invention provides a cable arrangement for pulling a cable through a borehole, wherein the arrangement comprises;
- a number of cables,
- a number of clamps fastened to the cable bundle preferably arranged with an uniform distribution in the longitudinal direction of the cable bundle,
- one or more coupling elements which hold together said clamps in the longitudinal direction of the cable bundle,
wherein the coupling element is in the form of an elongated rail which extends externally with respect to the cable bundle and is comprised of fastening means for attachment to a number of clamps, and
wherein one, two, three or more coupling elements are fastened to the same clamp in the radial outer periphery of the clamp, wherein said fastening means are flexible in the longitudinal direction such that the clamp can be fastened to the coupling element in almost any position in the longitudinal direction of the coupling element, characterized in that the number of cables are held together in a cable bundle, and the coupling element is comprised of a longitudinal pin in all or in part of the longitudinal direction of the coupling element arranged to be able to be received in, and engage with, a recess in said clamps, wherein the width of the coupling element extends mainly radially outwards from the longitudinal axis of the cable bundle as the coupling element is attached to the clamps and the cable bundle.

In one embodiment is the coupling element comprised of a number of friction reducing means radially outwards in a cable arrangement to reduce friction when pulling the cable arrangement through a borehole.

In one embodiment, the arrangement is comprised of two or three coupling elements, connected to one clamp preferably evenly over the radial outer periphery of the clamp.

In one embodiment, said coupling element is comprised of a number of friction-reducing means for the reduction of friction as the cable arrangement is pulled through a borehole.

In one embodiment, said clamps are comprised of a number of friction-reducing means for the reduction of friction as the cable arrangement is pulled through a borehole.

In one embodiment is said friction reducing means a number of wheels and the centre axis of said wheels is arranged embedded in the coupling elements.

In one embodiment, said coupling element and/or said clamps are comprised of means for receiving additional cables such as fibre and/or signal cables.

In a further aspect, the present invention provides a method for pulling a cable arrangement as described above, comprising a cable or a number of cables bundled together in a cable bundle, through a borehole, characterised in that a number of clamps are fastened to the cable or the cable bundle, uniformly distributed over the longitudinal direction of the cable bundle, that to said clamps radially in the outer periphery of the clamp is fastened a number of coupling elements where the coupling elements have an elongated shape corresponding to the elongated shape of the cable bundle so as to establish a cable arrangement, and that the friction between the cable arrangement and the inner surfaces of the borehole by pulling the cable arrangement through the borehole is reduced, wherein the total friction between the cable arrangement and the borehole is reduced as the cable arrangement is provided with a number of uniformly distributed contact points with the inner surfaces of the borehole.

In one embodiment, said multitude of contact points are friction reducing means, such as wheels or balls.

### Description of Figures

Preferred embodiments of the invention shall in the following be described in more detail with reference to the accompanying figures, where:
Figure 1 shows schematically in perspective an arrangement where clamps and coupling elements hold together a number of cables.

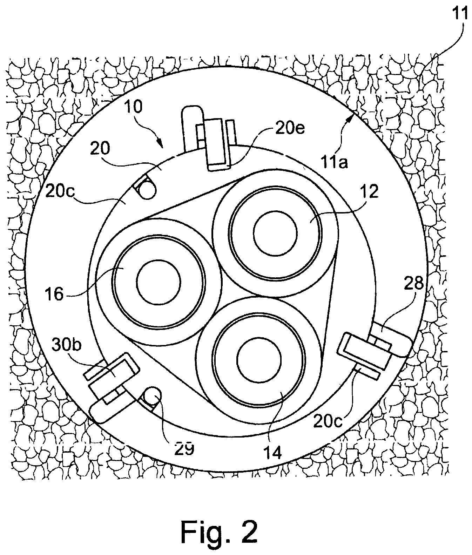

Figure 2 shows schematically in cross section a cable arrangement with clamps, friction reducing means against the borehole and coupling means.

### Description of preferred embodiments of the invention.

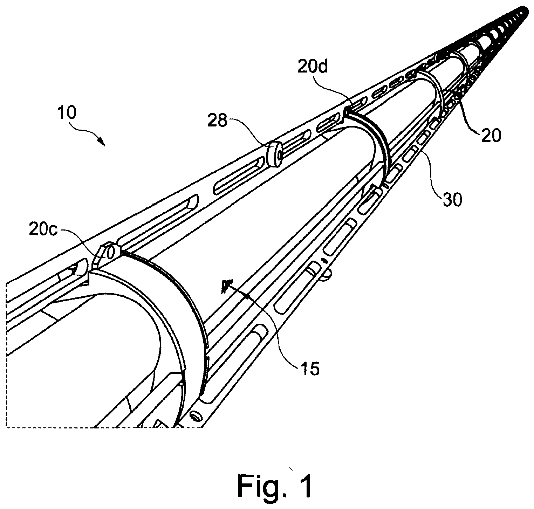

Figure 1 shows schematically in perspective how a number of elongated coupling elements 30 connect together a number of clamps 20 which hold together a number of elongated cables 12,14,16. The clamps 20 bundle together the cables 12, 14,16, and the coupling elements 30 connect the clamps, which are preferably uniformly distributed along the entire length of the cables 12,14, 16. A number of cables which are arranged together for pulling through a borehole 11, for example, three cables 12, 14, 16, are now described here as a cable bundle 15. The coupling elements 30 can be fastened to the clamps 20 in any way, and figure 1 shows an embodiment where each clamp 20 has a number of attachment lugs 20c arranged so that one with the fastening means 20d such as screws, bolts, snap locks etc. can be attached to the coupling elements 30.

In the radial periphery of the clamp 20 there are customised fasteners 20c for attachment to a number of coupling elements.

Each of the coupling elements 30 extends as long as the length of the cable bundle15, but in some embodiments the cable bundle 15 is longitudinally equipped with multiple coupling elements 30. If the clamp 20 is adapted for attaching several coupling elements 30, then at least one of these can extend along the whole length of the cable bundle 15, while one or more of the remaining coupling elements 30 can be arranged in only parts of the length, and also so that several coupling elements in total cover the whole or large parts of the cable bundle 15, in the longitudinal direction.

The clamps 20 can be of any type that is securely fastened to the cable bundle 15, so that one in the pulling of the cable bundle 15 through a borehole 11 can apply pull forces to the coupling elements 30 and that these, via a number of clamps 20, transfer the pulling forces to the cable bundle 15 in anchor points of all the clamps 20 to the cable bundle 15. As mentioned, in the clamps 20 there are attachment lugs 20c equipped for connecting a coupling element 30 to clamps 20. In a preferred embodiment, clamps 20 are equipped with recesses 20e for receiving the corresponding longitudinal coupling elements 30. By such a joining of the coupling elements 30 in recesses 22e in the clamps 20, the stability of the cable arrangement 10 will be improved. The clamps 20 and coupling elements 30, and with the attachment of the clamps 20 to the cable bundle 15, provide a very stable cable arrangement 10, i.e. an arrangement 10 which is sufficiently stable such that very long cable bundles 15 can be pulled through an elongated borehole 11. The considerable forces that are used to pull the cable bundle 15 through the borehole 11 can be applied directly to the cable bundle 15, or indirectly to the cable bundle 15 and the cables 12,14,16 via coupling elements 30 and clamps 20.

With a sufficient number of clamps 20 in the length of the cable bundle 15, one will prevent the cable bundle 15 from rubbing against the inner surfaces 11a of the borehole 11 when pulling through the borehole 11.

Although the purpose of the invention is to enable the pulling of heavy cable bundles 15 in a borehole 11, the arrangement 10 can, with an attachment of clamps 20 and coupling elements 30, also be used on lighter cable bundles 15 and also for solutions which shall not be pulled through boreholes 11. The coupling elements 30 can, for example, be provided with means for attachment to other constructions, for instance, for suspension in pipelines, tunnels, etc.

In a preferred embodiment, the cable arrangement 10 is intended for pulling over a surface or through a borehole 11 and is therefore equipped with a number of friction reducing means 28. In an embodiment of the arrangement 10, there is a coupling element 30 which is comprised of a number of friction reducing means 28, and the friction reducing means 28 on the coupling element 30 is then connected to a cable arrangement 10 in a radial extension projecting beyond the clamps 20.

A particularly preferred embodiment extends the width of the coupling element 30 radially, with respect to the centre axis of the cable arrangement 10. Hence, the coupling element 30 is in the form of a rail with a length, width and height. The width is substantially larger, perhaps 1-10 multiples of the height. The rail-shaped coupling element 30 is arranged as edged (width extending radially outwards), and not flat on the circumference of the cable arrangement 10. This causes a significant stiffening of the cable arrangement 10.

It is preferable that the friction reducing means is in the form of wheels. When the width of the coupling element has a given extension, the centre of the wheels 28 are embedded in the coupling element 30. Thus, one can use the wheels 28 of a relatively large diameter as the centre of the wheel 28 is embedded in the rail, i.e. at a considerable distance from the radial outer periphery of the coupling element 30.

In another embodiment of the cable arrangement 10 the friction reducing means 28 are arranged on the clamps 20. The friction reducing means 28 projects radially outermost, and is in contact with the inner surface 11a of the borehole 11, and then extends out between two coupling elements 30.

Often, it is preferred that a cable arrangement 10, in addition to high voltage cables 12, 14, 16, also contains other cables, such as a fibre cable 29. It is then preferred that this is held radially in place by the clamp 20, that it is arranged externally with respect to the cable bundle 15, and that it is arranged within the coupling elements 30.

## Claims

1. Cable arrangement (10) for pulling a cable through a borehole, wherein the arrangement (10) comprises;
- a number of cables (12, 14, 16), held together in a cable bundle (15),
- a number of clamps (20) fastened to the cable bundle (15) preferably arranged with an uniform distribution in the longitudinal direction of the cable bundle (15),
- one or more coupling elements (30) which hold together said clamps (20) in the longitudinal direction of the cable bundle (15),
wherein the coupling element (30) is in the form of an elongated rail (30) which extends externally with respect to the cable bundle (15) and is comprised of fastening means for attachment to a number of clamps (20), and
wherein one, two, three or more coupling elements (30) are fastened to the same clamp (20) wherein said fastening means are flexible in the longitudinal direction such that the clamp (20) can be fastened to the coupling element (30) in almost any position in the longitudinal direction of the coupling element (30), **characterized in that** the coupling element (30) is fastened in the radial outer periphery (20c) of the clamp (20) and is comprised of a longitudinal pin (30b) in all or in part of the longitudinal direction of the coupling element (30) arranged to be able to be received in, and engage with, a recess (20e) in said clamps (20), wherein the width of the coupling element (30) extends mainly radially outwards from the longitudinal axis of the cable bundle as the coupling element is attached to the clamps (20) and the cable bundle (15).

2. Cable arrangement (10) according to claim 1, **characterised in that** the coupling element (30) is comprised of a number of friction reducing means (28) radially outwards in a cable arrangement (10) to reduce friction when pulling the cable arrangement (10) through a borehole (11).

3. Cable arrangement (10) according to claim 1, **characterised in that** the arrangement (10) is comprised of two or three coupling elements (30) connected to one clamp (20) preferably uniformly over the radial outer periphery (20c) of the clamp (20).

4. Cable arrangement (10) according to claim 1, **characterised in that** said coupling element (30) is comprised of a number of friction reducing means (28) for reducing friction as the cable arrangement (10) is pulled through a borehole (11).

5. Cable arrangement (10) according to claim 1, **characterised in that** said clamp (20) is comprised of a number of friction reducing means (28) for reducing friction as the cable arrangement (10) is pulled through a borehole (11).

6. Cable arrangement (10) according to claim 1, **characterised in that** said friction reducing means (28) is a number of wheels (28) and that the centre axis of said wheels (28) is arranged embedded in the coupling elements (30).

7. Cable arrangement (10) according to claim 1, **characterised in that** said coupling element (30) and/or said clamp (20) are comprised of means for receiving additional cables (29) such as fibre and/or signal cables (29).

8. Method for pulling a cable arrangement according to claim 1, comprising a cable or a number of cables (12,14,16) bundled together in a cable bundle (15), through a borehole (11), **characterised in that** a number of clamps (20) are fastened to the cable or the cable bundle (15), uniformly distributed over the longitudinal direction of the cable bundle (15), that to said clamps (20) radially in the outer periphery (20c) of the clamp (20) is fastened a number of coupling elements (30) where the coupling elements (30) have an elongated shape corresponding to the elongated shape of the cable bundle (15) so as to establish a cable arrangement (10), and that the friction between the cable arrangement (10) and the inner surfaces (11a) of the borehole (11) by pulling the cable arrangement (10) through the borehole (11) is reduced, wherein the total friction between the cable arrangement (10) and the borehole (11) is reduced as the cable arrangement (10) is provided with a number of uniformly distributed contact points with the inner surfaces (11a) of the borehole (11).

9. Method according to claim 11, **characterised in that** said number of contact points are friction reducing means (28) such as wheels or balls.

## Patentansprüche

1. Kabelanordnung (10) zum Ziehen eines Kabels durch ein Bohrloch, wobei die Anordnung (10) Folgendes umfasst;
- eine Anzahl von Kabeln (12,14,16), die in einem Kabelbündel (15) zusammengehalten sind,
- eine Anzahl von Schellen (20), die an dem Kabelbündel (15) befestigt sind, die vorzugsweise mit einer gleichförmigen Verteilung in Längsrichtung des Kabelbündels (15) angeordnet sind,
- ein oder mehrere Kopplungselemente (30), die die Schellen (20) in der Längsrichtung des Kabelbündels (15) zusammenhalten, wobei das Kopplungselement (30) in der Form einer länglichen Schiene (30) ist, die sich in Bezug auf das Kabelbündel (15) nach außen erstreckt und Befestigungsmittel zum Anbringen an einer Anzahl von Schellen (20) aufweist, und wobei ein, zwei, drei oder mehr Kopplungselemente (30) an derselben Schelle (20) befestigt sind, wobei die Befestigungsmittel in der Längsrichtung flexibel sind, sodass die Schelle (20) an dem Kopplungselement (30) an nahezu jeder Position in der Längsrichtung des Kopplungselements (30) befestigt werden kann, **dadurch gekennzeichnet, dass** das Kopplungselement (30) an dem radialen Außenumfang (20c) der Schelle (20) befestigt wird und aus einem Längsstift (30b) in der gesamten oder einem Teil der Längsrichtung des Kopplungselements (30) besteht, der angeordnet ist, um in der Lage zu sein, in einer Aussparung (20e) in den Schellen (20) aufgenommen zu werden und damit einzugreifen, wobei sich die Breite des Kopplungselements (30) hauptsächlich radial von der Längsachse des Kabelbündels nach außen erstreckt, wenn das Kopplungselement an den Schellen (20) und dem Kabelbündel (15) angebracht ist.

2. Kabelanordnung (10) nach Anspruch 1, **dadurch gekennzeichnet, dass** das Kopplungselement (30) aus einer Anzahl von reibungsreduzierenden Mitteln (28) radial nach außen in einer Kabelanordnung (10) besteht, um eine Reibung zu reduzieren, wenn die Kabelanordnung (10) durch ein Bohrloch (11) gezogen wird.

3. Kabelanordnung (10) nach Anspruch 1, **dadurch gekennzeichnet, dass** die Anordnung (10) aus zwei oder drei Kopplungselementen (30) besteht, die mit einer Schelle (20) vorzugsweise gleichförmig über den radialen Außenumfang (20c) der Schelle (20) verbunden sind.

4. Kabelanordnung (10) nach Anspruch 1, **dadurch gekennzeichnet, dass** das Kopplungselement (30) aus einer Anzahl von reibungsreduzierenden Mitteln (28) besteht, um eine Reibung zu reduzieren, wenn die Kabelanordnung (10) durch ein Bohrloch (11) gezogen wird.

5. Kabelanordnung (10) nach Anspruch 1, **dadurch gekennzeichnet, dass** die Schelle (20) aus einer Anzahl von reibungsreduzierenden Mitteln (28) besteht, um eine Reibung zu reduzieren, wenn die Kabelanordnung (10) durch ein Bohrloch (11) gezogen wird.

6. Kabelanordnung (10) nach Anspruch 1, **dadurch gekennzeichnet, dass** das reibungsreduzierende Mittel (28) eine Anzahl von Rädern (28) ist und dass die Mittelachse der Räder eingebettet (28) in den Kopplungselementen (30) angeordnet ist.

7. Kabelanordnung (10) nach Anspruch 1, **dadurch gekennzeichnet, dass** das Kopplungselement (30) und/oder die Schelle (20) aus Mitteln zum Aufnehmen zusätzlicher Kabel (29), wie z. B. Faser- und/oder Signalkabel (29), besteht.

8. Verfahren zum Ziehen einer Kabelanordnung nach Anspruch 1, die ein Kabel oder eine Anzahl von Kabeln (12, 14, 16) umfasst, die in einem Kabelbündel (15) gebündelt sind, durch ein Bohrloch (11), **dadurch gekennzeichnet, dass** eine Anzahl von Schellen (20) an dem Kabel oder dem Kabelbündel (15) befestigt ist, die gleichförmig über die Längsrichtung des Kabelbündels (15) verteilt sind, dass an den Schellen (20) radial an dem Außenumfang (20c) der Schelle (20) eine Anzahl von Kopplungselementen (30) befestigt ist, wo die Kopplungselemente (30) eine längliche Form entsprechend der länglichen Form des Kabelbündels (15) aufweisen, um eine Kabelanordnung (10) herzustellen, und dass die Reibung zwischen der Kabelanordnung (10) und den Innenflächen (11a) des Bohrlochs (11) durch Ziehen der Kabelanordnung (10) durch das Bohrloch (11) reduziert ist, wobei die gesamte Reibung zwischen der Kabelanordnung (10) und dem Bohrloch (11) reduziert ist, wenn die Kabelanordnung (10) mit einer Anzahl von gleichförmig verteilten Kontaktpunkten mit den Innenflächen (11a) des Bohrlochs (11) bereitgestellt ist.

9. Verfahren nach Anspruch 11, **dadurch gekennzeichnet, dass** die Anzahl von Kontaktpunkten reibungsreduzierende Mittel (28), wie z. B. Räder oder Kugeln, sind.

## Revendications

1. Agencement de câbles (10) destiné à tirer un câble à travers un trou de forage, dans lequel l'agencement (10) comprend :
- un certain nombre de câbles (12, 14, 16), maintenus ensemble dans un faisceau de câbles (15),
- un certain nombre de brides de serrage (20) fixées au faisceau de câbles (15) disposées de préférence en une répartition uniforme dans la direction longitudinale du faisceau de câbles (15),
- un ou plusieurs éléments de couplage (30) qui maintiennent ensemble lesdites brides de serrage (20) dans la direction longitudinale du faisceau de câbles (15), dans lequel l'élément de couplage (30) se présente sous la forme d'un rail allongé (30) qui s'étend vers l'extérieur par rapport au faisceau de câbles (15) et est constitué d'un moyen de fixation destiné à fixer un certain nombre de brides de serrage (20), et dans lequel un, deux, trois ou plus éléments de couplage (30) sont fixés à la même bride de serrage (20) dans lequel ledit le moyen de fixation est flexible dans la direction longitudinale de sorte que la bride de serrage (20) puisse être fixée à l'élément de couplage (30) dans presque n'importe quelle position dans la direction longitudinale de l'élément de couplage (30), **caractérisé en ce que** l'élément de couplage (30) est fixé dans la périphérie radiale externe (20c) de la bride de serrage (20) et est constitué d'un axe longitudinal (30b) sur toute ou une partie de la direction longitudinale de l'élément de couplage (30) agencé pour pouvoir être reçu dans, et s'engager avec, un évidement (20e) dans lesdites brides de serrage (20), dans lequel la largeur de l'élément de couplage (30) s'étend principalement radialement vers l'extérieur à partir de l'axe longitudinal du faisceau de câbles lorsque l'élément de couplage est fixé aux brides de serrage (20) et au faisceau de câbles (15).

2. Agencement de câbles (10) selon la revendication 1, **caractérisé en ce que** l'élément de couplage (30) est constitué d'un certain nombre de moyens de réduction de frottement (28) radialement vers l'extérieur dans un agencement de câbles (10) pour réduire le frottement lors de la traction de l'agencement de câbles (10) à travers un trou de forage (11).

3. Agencement de câbles (10) selon la revendication 1, **caractérisé en ce que** l'agencement (10) est constitué de deux ou trois éléments de couplage (30) reliés à une bride de serrage (20) de préférence uniformément sur la périphérie radiale externe (20c) de la bride de serrage (20).

4. Agencement de câbles (10) selon la revendication 1, **caractérisé en ce que** ledit élément de couplage (30) est constitué d'un certain nombre de moyens de réduction de frottement (28) destinés à réduire le frottement lorsque l'agencement de câbles (10) est tiré à travers un trou de forage (11).

5. Agencement de câbles (10) selon la revendication 1, **caractérisé en ce que** ladite bride de serrage (20) est constituée d'un certain nombre de moyens de réduction de frottement (28) destinés à réduire le frottement lorsque l'agencement de câbles (10) est tiré à travers un trou de forage (11).

6. Agencement de câbles (10) selon la revendication 1, **caractérisé en ce que** ledit moyen de réduction de frottement (28) est un certain nombre de roues (28) et **en ce que** ledit axe central des roues (28) est agencé intégré dans les éléments de couplage (30).

7. Agencement de câbles (10) selon la revendication 1, **caractérisé en ce que** ledit élément de couplage (30) et / ou ladite bride de serrage (20) sont constitués de moyens destinés à recevoir des câbles supplémentaires (29) tels que des câbles fibres et / ou de signaux (29).

8. Procédé de traction d'un agencement de câbles selon la revendication 1, comprenant un câble ou un certain nombre de câbles (12, 14, 16) groupés ensemble en faisceau dans un faisceau de câbles (15), à travers un trou de forage (11), **caractérisé en ce qu'**un certain nombre de brides de serrage (20) sont fixées au câble ou au faisceau de câbles (15), réparties uniformément sur la direction longitudinale du faisceau de câbles (15), de sorte que lesdites brides de serrage (20) radialement dans la périphérie externe (20c) de la bride de serrage (20) soient fixées à un certain nombre d'éléments de couplage (30) où les éléments de couplage (30) ont une forme allongée correspondant à la forme allongée du faisceau de câbles (15) de manière à établir un agencement de câbles (10), et que le frottement entre l'agencement de câbles (10) et les surfaces internes (11a) du trou de forage (11) par la traction de l'agencement de câbles (10) à travers le trou de forage (11) soit réduit, dans lequel le frottement total entre l'agencement de câbles (10) et le trou de forage (11) est réduit car l'agencement de câbles (10) est pourvu d'un certain nombre de points de contact uniformément répartis avec les surfaces internes (11a) du trou de forage (11).

9. Procédé selon la revendication 8, **caractérisé en ce que** ledit nombre de points de contact sont des moyens de réduction du frottement (28) tels que des roues ou des billes.
